# EUROPEAN PATENT APPLICATION

(11) **EP 4 549 086 A1**
(43) Date of publication of application: **07.05.2025**
(21) Application number: 23850346.0
(22) Date of filing: 27.07.2023
(51) Int. Cl.: B23Q 15/013, B23Q 15/12

(54) **SYSTEM FOR CANCELLING MICRO VIBRATION DURING TURNING PROCESSING, AND METHOD THEREFOR**

(30) Priority: 02.08.2022 KR 20220096055
(71) Applicant: Hanwha Precision Machinery Co., Ltd., Changwon-si, Gyeongsangnam-do 51552 (KR)
(72) Inventor: BYEON, Cheol Hong, Changwon-si Gyeongsangnam-do 51552 (KR)
(74) Representative: Walaski, Jan Filip
(86) International application number: PCT/KR2023/010936
(87) International publication number: WO 2024/029842

(57) **Abstract**

The present disclosure relates to a micro vibration damping system for turning and a method thereof, and may include a driving unit implementing driving of a tool post, a calculation unit calculating a fine movement distance of the tool post according to a rotation speed according to the driving of the tool post and a machining condition set according to a workpiece, a sensor unit mounted on the tool post and sensing an acceleration signal for a section in which stop and rapid movement of the workpiece occur, and a control unit receiving the signal of the sensor unit, controlling the driving of the driving unit according to the fine movement distance calculated by the calculation unit, and controlling the tool post so that the tool post is finely moved in a direction different from a vibration direction of the tool post.
In addition, the micro vibration damping system for turning and the method thereof as described above may be variously implemented according to an embodiment.

## Description

### [Technical Field]

The present disclosure relates to a micro vibration damping system for turning capable of controlling micro vibrations generated in a tool post by applying a control algorithm that generates vibrations in an opposite direction to a vibration direction appearing in the tool post during an instantaneous direction change, stop, or acceleration for turning, and a method thereof.

### [Background Art]

An automatic lathe is a machining device that may simultaneously perform left and right side surface machining and front surface machining of a workpiece in a state in which the workpiece is chucked on a main spindle and guided by a guide bush, and a machining cycle time may be reduced when the workpiece is machined using an automatic lathe.

In addition, the automatic lathe is a lathe machining device suitable for mass production by automatically performing most of the preparing, machining, and finishing processes such as input of a material, production, and discharge of a finished product.

In the case of a machining method of a general automatic lathe according to the related art, a machining chip is generated during machining of a workpiece, and when the generated machining chip is excessively long or a discharge direction of the generated machining chip is bad, the chip is rolled around the workpiece or a scratch is generated, which causes a problem in machining a target shape.

Accordingly, chip segmentation of the machining chip generated during the machining of the workpiece generates a difference in precision of the machining of the workpiece. Accordingly, a problem such as precision generated in the workpiece during the machining of the workpiece has been solved through the segmentation of the machining chip generated during the machining of the workpiece. There are two solutions for such segmentation of the machining chip: a solution through a tool and a solution through a control algorithm.

First, the solution for segmenting the machining chip using the tool may be provided to optimize a chip breaker shape of a cutting tool for each tool maker and control chip segmentation to facilitate chip control.

However, in such a control method for segmenting the chip, the chip is segmented by repeating a rapid direction change due to forward movement and backward movement of the tool mounted on a tool post along a machining path during machining of the tool. However, as the rapid direction change due to the forward movement and the backward movement of the tool is repeated, vibrations cannot but be generated in the tool post, particularly in the workpiece that is machined. Due to such vibrations, there is a problem that surface roughness of the workpiece cannot but deteriorate compared to an existing cutting method. In addition, as the vibrations are continuously generated, stress is continuously applied to an equipment, and a problem that the overall durability of the equipment is reduced due to the stress of the equipment cannot but occur.

In the solution for segmenting the machining chip through the control algorithm, the chip may be segmented or control may be facilitated by programming a path for segmenting the chip at intervals in consideration of a machining path for machining the workpiece.

A method of controlling the chip segmentation of the workpiece through the control algorithm is to continuously change a movement speed of the tool for the purpose of the chip segmentation. Therefore, there is a problem that the movement speed of the tool should be continuously changed in order to obtain good surface roughness of the workpiece.

Accordingly, in the above-described methods for solving the chip segmentation, the chip is segmented through an instantaneous direction change, but there is a problem that the surface roughness of the workpiece deteriorates due to the generated vibrations and the like, and a fine band is generated in a product because vibrations are also generated in the tool due to instantaneous stop and acceleration even when the chip is segmented through the change in the movement speed of the tool.

In addition, vibrations may be generated in the automatic lathe itself in addition to the tool post or the tool. When the vibrations are generated in the automatic lathe, instantaneous vibrations are generated in a downward direction in the tool post due to gravity and weight of the tool post. In this case, when the tool post is located above a material, a fine valley is formed in the product, and when the tool post is located below the material, a fine ridge is formed in the product. A fine band shape that appears as described above cannot but have a negative effect on the surface roughness of the workpiece.

### (Related Art Document)

Korean Utility Model No. 20-0490042 (registered on September 6, 2019)

### [Disclosure]

### [Technical Problem]

Aspects of the present disclosure provide a micro vibration damping system for turning capable of damping vibrations generated in a tool post by applying a control algorithm that generates vibrations in an opposite direction to a vibration direction appearing in the tool post during an instantaneous direction change, stop, or acceleration for turning for segmenting a machining chip to artificially control the tool post to vibrate in the opposite direction to micro vibrations generated in the tool post, and a method thereof.

However, aspects of the present invention are not restricted to those set forth herein. The above and other aspects will become more apparent to one of ordinary skill in the art to which the disclosure pertains by referencing the detailed description of the present invention given below.

### [Technical Solution]

In accordance with an aspect of the disclosure, a micro vibration damping system for turning may be provided and include:
a driving unit implementing driving of the tool post;
a calculation unit calculating a fine movement distance of the tool post according to a rotation speed according to the driving of the tool post and a machining condition set according to the workpiece;
a sensor unit mounted on the tool post and sensing a speed signal of the tool post, a movement signal of the tool post, and/or an instantaneous speed change signal of the tool post; and
a control unit controlling the driving unit according to the signal of the sensor unit.

According to an embodiment of the present disclosure, wherein the tool post is moved in a direction different from an actual vibration direction of the tool post in order to implement fine movement, and
the driving unit provides driving force so as to return the tool post to its original location as soon as the fine movement of the tool post by a set distance is completed.

According to an embodiment of the present disclosure, wherein a direction of the movement of the tool post includes both movement in a vertical direction and movement in a horizontal direction, and
the tool post implements the movement in the horizontal direction in a section in which rapid movement of the tool post after stop of the tool post occurs through the sensing by the sensor unit.

According to an embodiment of the present disclosure, wherein the control unit includes,
a speed controller controlling a speed of the driving unit; and
an acceleration controller for controlling the speed of the driving unit for by receiving an acceleration signal from the speed controller,
wherein said acceleration controller may be applied together with a signal from said sensor part.

According to an embodiment of the present disclosure, a movement distance of a horizontal axis of the tool post may be automatically adjusted according to a speed of the rapid movement of the tool post, a type of a set material, and a machining depth.

In accordance with an aspect of the disclosure, a micro vibration damping method for turning may be provided and include:
calculating the fine movement distance required to offset the vibration of the tool post after receiving processing conditions;
moving in a direction different from the actual vibration direction of the tool post to implement the fine movement; and
generating fine vibrations at the same timing as the occurrence of the vibration.

According to an embodiment of the present disclosure, the micro vibration damping method for turning may further include detecting the occurrence section of rapid movement during the processing of the workpiece before implementing the fine movement.

According to an embodiment of the present disclosure, the fine vibration may be generated by returning to the original position immediately after the completion of the fine movement of the tool post.

According to an embodiment of the present disclosure, the direction of the movement of the tool post may include both vertical and horizontal movements.

According to an embodiment of the present disclosure, the timing for the horizontal movement of the tool post may be applied in sections where rapid movement occurs after stopping, as detected by a sensor attached to the tool post.

According to an embodiment of the present disclosure, the horizontal movement distance may be variably adjusted according to the speed of the rapid movement, the type of material, and the processing depth.

Detailed contents of other embodiments are described in a detailed description and are illustrated in the drawings.

### [Advantageous Effects]

The micro vibration damping system for turning and the method thereof according to an embodiment of the present disclosure as described above may implement small vibrations compared to an actual movement section by controlling an axis in a horizontal direction rather than a vertical direction based on a workpiece, and may thus implement precise movement control compared to controlling the axis in the vertical direction based on the workpiece.

The effects of the present disclosure are not limited to the aforementioned effects, and other effects that are not mentioned may be obviously understood by one of ordinary skill in the art from the claims.

### [Description of Drawings]

FIG. 1 is a schematic driving block diagram of a micro vibration damping system for turning according to an embodiment of the present disclosure;
FIG. 2 is a schematic configuration block diagram of the micro vibration damping system for turning according to an embodiment of the present disclosure;
FIG. 3 is a schematic block diagram illustrating a configuration of the micro vibration damping system for turning according to an embodiment of the present disclosure and a driving state of the micro vibration damping system for turning according to the configuration;
FIG. 4 is a schematic view for comparing and describing movement of a tool post in a vertical direction and movement of the tool post in a horizontal direction for damping micro vibrations of the tool post in the micro vibration damping system for turning according to an embodiment of the present disclosure;
FIG. 5 is an enlarged view for comparing and describing the movement of the tool post in the vertical direction and the movement of the tool post in the horizontal direction for damping the micro vibrations of the tool post in the micro vibration damping system for turning according to an embodiment of the present disclosure;
FIG. 6 is a schematic view illustrating a drawing and an equation for calculating a fine movement distance in the micro vibration damping system for turning according to an embodiment of the present disclosure;
FIG. 7 is a driving flowchart for damping micro vibrations during machining and chip breaking of a workpiece in a micro vibration damping method for turning according to an embodiment of the present disclosure; and
FIG. 8 is a schematic flowchart of movement of a tool post in the horizontal direction for damping vibrations of a tool post in the micro vibration damping method for turning according to an embodiment of the present disclosure.

### * Explanation of symbols

100: micro vibration damping system
110: driving unit
120: calculation unit
130: sensor unit
140: control unit
141: speed controller
142: acceleration controller
143: stop controller
144: deceleration controller
150: tool post

### [Mode for Invention]

Advantages and features of embodiments (including methods) of the present disclosure will become apparent from the descriptions of non-limiting example embodiments provided below with reference to the accompanying drawings. However, the present disclosure is not limited to the example embodiments described herein, and may be implemented in various ways. The example embodiments are provided for making the present disclosure thorough and for fully conveying the scope of the present disclosure to those skilled in the art. Like reference numerals denote like elements throughout the descriptions.

Accordingly, in some embodiments, well-known process steps, well-known structures, and well-known techniques are not specifically described to avoid ambiguity in interpreting the present invention.

Terms used herein are for describing example embodiments rather than limiting the present disclosure. As used herein, the singular forms are intended to include plural forms as well, unless the context clearly indicates otherwise. Throughout this specification, the word "comprise" (or "include") and variations such as "comprises" (or "includes") or "comprising" (or "including") will be understood to imply the inclusion of stated elements but not the exclusion of any other elements.

In addition, the embodiments described in this specification will be explained with reference to the cross-sectional views and/or schematic diagrams, which are idealized illustrations of the present invention. Therefore, the shapes depicted in the exemplary drawings may vary due to manufacturing techniques and/or tolerances. Accordingly, the embodiments of the present invention are not limited to the specific forms shown but also include variations in shape resulting from the manufacturing process. Furthermore, in the drawings of the present invention, each component may be illustrated as being somewhat enlarged or reduced in size for convenience of explanation. Throughout the specification, the same reference numerals denote the same components.

Hereinafter, the present disclosure will be described with reference to the drawings for describing a micro vibration damping system for turning and a method thereof according to embodiments of the present disclosure.

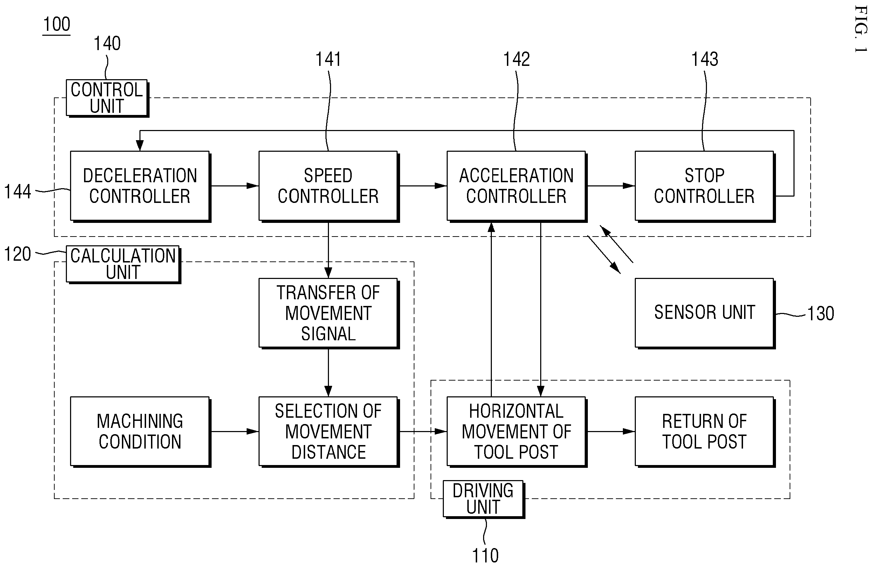

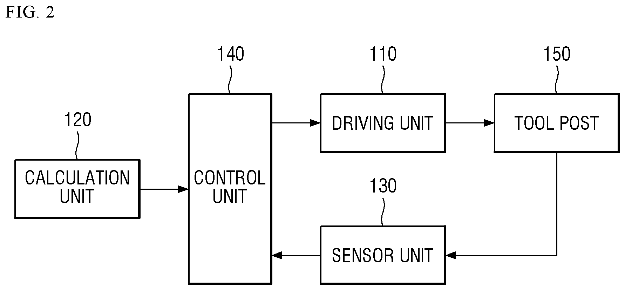

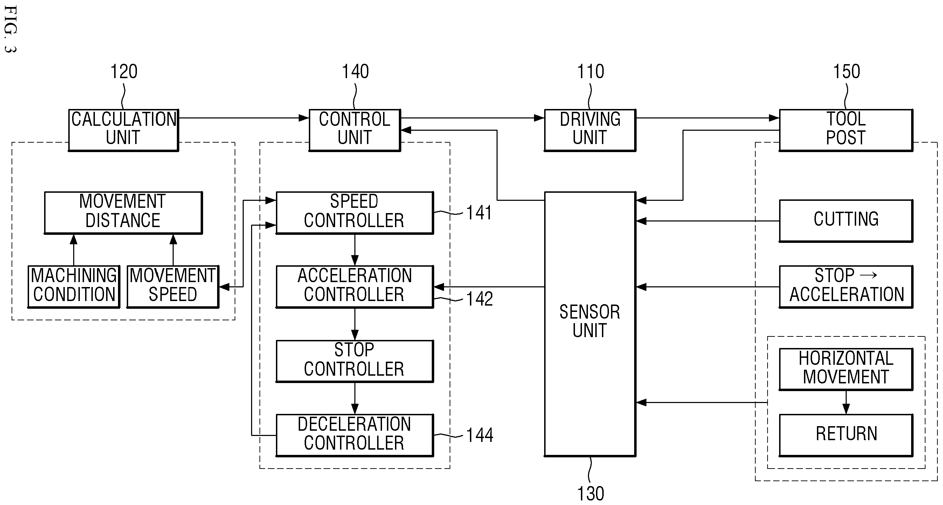

FIG. 1 is a schematic block diagram of a micro vibration damping system 100 for turning according to an embodiment of the present disclosure. FIG. 2 is a schematic configuration block diagram of the micro vibration damping system 100 for turning according to an embodiment of the present disclosure. FIG. 3 is a schematic block diagram illustrating a configuration of the micro vibration damping system 100 for turning according to an embodiment of the present disclosure and a driving state of the micro vibration damping system 100 for turning according to the configuration.

Referring to FIGS. 1 to 3, the micro vibration damping system 100 for turning and method thereof according to an embodiment of the present disclosure are provided to damp micro vibrations generated in a tool post 150 such as an automatic lathe due to an instantaneous direction change or stop and acceleration for turning for chip segmentation during an operation of a workpiece on the tool post 150. The micro vibration damping system 100 for turning and the method thereof are used to damp micro vibrations generated in the tool post 150 with vibrations in an opposite direction that is artificially controlled, by applying a control algorithm that generates vibrations in the opposite direction to a vibration direction appearing in the tool post 150.

Specifically, referring to FIGS. 1 to 3, in the micro vibration damping system 100 for turning according to an embodiment of the present disclosure, for the purpose of chip segmentation or turning during machining of the workpiece on the tool post 150, the tool post 150 is stopped and then instantaneously accelerated to be rapidly moved, such that a speed is changed. Vibrations are generated in the tool post 150 when the tool post 150 is instantaneously accelerated after being stopped. The micro vibration damping system 100 for turning according to an embodiment of the present disclosure may be provided to damp the vibrations generated in the tool post 150 by sensing the vibrations of the tool post 150 and controlling the fine movement and return of the tool post 150 in a direction horizontal to an axis of the workpiece and a direction vertical to the vibration direction of the tool post 150.

Specifically, the micro vibration damping system 100 for turning according to an embodiment of the present disclosure may include the tool post 150, a driving unit 110, a calculation unit 120, a sensor unit 130, and a control unit 140.

A spindle may be described as an example of the tool post 150, and the tool post 150 may be provided to implement movement in a vertical direction and movement in a horizontal direction by the driving unit 110 to be described later.

The driving unit 110 may be provided to provide driving force to the tool post 150. The driving unit 110 may be provided to provide driving of the tool post 150 during rapid movement due to stop and instantaneous acceleration for segmentation of a chip generated during the machining of the workpiece as well as driving of the tool post 150 for machining the workpiece. As described later, the driving unit 110 may be provided to provide driving force for horizontal movement of the tool post 150 as well as vertical movement of the tool post 150.

The driving unit 110 may be provided to provide driving force so that the tool post 150 moves in a direction different from an actual vibration direction of the tool post 150 in order to implement fine movement of the tool post 150 for damping the vibrations generated in the tool post 150. As described later, when the tool post 150 is stopped and instantaneously accelerated for the purpose of the chip segmentation, the actual vibration direction generated in the tool post 150 is a downward direction, i.e., the vertical direction, in which instantaneous vibrations are generated by weight of the tool post 150 and gravity. Accordingly, the fine movement of the tool post 150 may be implemented in the horizontal direction different from the vertical direction, which is the actual vibration direction of the tool post 150.

The driving unit 110 finely moves the tool post 150 in the horizontal direction in order to damp the vibration generated in the tool post 150, and provides driving force so as to return the tool post 150 to its original location as soon as the fine movement of the tool post 150 by a set distance is completed. Through the driving in which the tool post 150 finely moves and returns as soon as the fine movement of the tool post 150 is completed, the tool post 150 may move in the opposite direction to the actually generated vibrations to damp the actually generated vibrations. In addition, the movement of the tool post 150 in the horizontal direction may be implemented in a section in which rapid movement of the tool post 150 after the stop of the tool post 150 occurs.

The calculation unit 120 may be provided to calculate a fine movement distance of the tool post 150 according to a rotation speed according to the driving of the tool post 150 and a machining condition set according to the workpiece.

For example, the calculation unit 120 may receive a rotation speed or a movement speed of the tool post 150 through a speed controller 141 to be described later. In addition, user input items, specifically, machining conditions according to the workpiece may be input to the calculation unit 120 by a user. The calculation unit 120 may calculate a movement distance for the chip segmentation during machining of the workpiece and the fine movement distance required to damp the vibrations of the tool post 150 when the tool post 150 is stopped and instantaneously accelerated for the purpose of the chip segmentation as well as a movement distance for machining the workpiece according to the rotation speed or the movement speed of the tool post 150 and the machining condition.

The sensor unit 130 may be mounted on the tool post 150. The sensor unit 130 may be attached to the tool post 150, and may be provided to sense a speed signal of the tool post 150, a movement signal of the tool post 150, and/or an instantaneous speed change signal of the tool post 150. In particular, the sensor unit 130 may be provided to sense an acceleration signal for a section in which stop and rapid movement of the workpiece occur. The signal sensed by the sensor unit 130 may be applied to the control unit 140 to be described later, specifically, an acceleration controller 142.

That is, the sensor unit 130 senses the section in which the rapid movement of the tool post 150 after the stop of the tool post 150 occurs for the purpose of the chip segmentation during machining. A sensing value of the sensor unit 130 is applied to the control unit 140 to be described below and controls the driving of the driving unit 110 so as to damp the vibrations generated due to an instantaneous speed change of the tool post 150 after the stop of the tool post 150. For example, in the present disclosure, the vibrations may be damped by implementing the movement of the tool post 150 in the horizontal direction vertical to the vibration direction of the tool post 150 in the section in which the rapid movement (instantaneous speed change) of the tool post 150 after the stop of the tool post 150 occurs.

The control unit 140 may be provided to receive the signal from the sensor unit 130 and control the driving of the driving unit 110 according to the movement distance calculated by the calculation unit 120. For example, the control unit 140 may be provided to control a driving speed of the driving unit 110 for cutting the workpiece by the tool post 150 or control the driving of the driving unit 110 so as to damp the vibrations of the tool post 150 due to the instantaneous speed change of the tool post 150 for the chip segmentation that occurs during the machining of the workpiece. In addition, the control unit 140 may be provided to control the driving of the driving unit 110 so that a speed of the tool post 150 instantaneously accelerated in order to perform the machining of the workpiece after performing the chip segmentation corresponds to a cutting speed.

When the control unit 140 controls the speed of the tool post 150 for the chip segmentation, the control unit 140 damps the micro vibrations generated in the tool post 150 by controlling the tool post 150 to move in a direction different from the vibration direction of the tool post 150 generated due to the instantaneous acceleration of the tool post 150 after the stop of the tool post 150, for example, the direction vertical to the vibration direction of the tool post 150.

The control unit 140 may include the speed controller 141, the acceleration controller 142, a stop controller 143, and a deceleration controller 144.

The speed controller 141 may be provided to control a speed of the driving unit 110 in order to machine the workpiece. In addition, the speed controller 141 may set a movement speed, a machining speed, or/and a rotation speed according to the workpiece or the tool post 150. A movement signal or/and movement signal data according to the rotation speed, the movement speed, or/and the machining speed of the tool post 150 set by the speed controller 141 may be applied to the calculation unit 120. The movement signal or/and the movement signal data applied from the speed controller 141 to the calculation unit 120 may be calculated through the calculation unit 120 together with user input data (e.g., a machining condition) set according to the workpiece or/and the tool post 150. The calculation unit 120 receives the data and calculates a movement distance of the tool post 150 for machining the workpiece and a movement distance of the tool post 150 for the chip segmentation.

The speed controller 141 may set a movement distance of the tool post 150 for the purpose of the chip segmentation, and may transfer an instantaneous acceleration signal of the driving unit 110 according to the rapid movement (instantaneous speed change) of the tool post 150 at a location for the chip segmentation to the acceleration controller 142 to be described below.

The acceleration controller 142 may be provided to receive an acceleration signal for the chip segmentation from the speed controller 141, receive an instantaneous speed detection value sensed by the sensor unit 130, and control a movement speed and/or a movement direction of the driving unit 110. When the instantaneous acceleration signal of the speed controller 141 and the sensor unit 130 is transferred to the acceleration controller 142, the tool post 150 performs the chip segmentation, but the vibrations are generated in an up-and-down direction vertical to an axial direction of the workpiece provided in the horizontal direction. Accordingly, the acceleration controller 142 may be provided to control movement of the driving unit 110 in the horizontal direction and return movement of the driving unit 110 with respect to the axial direction in an instantaneous acceleration section of the tool post 150.

A movement distance of a horizontal axis of the tool post 150 may be variably and automatically adjusted according to a speed of the rapid movement of the tool post, a type of a set material, and a machining depth.

The stop controller 143 may be provided to receive a vibration signal of the tool post 150 sensed by the sensor unit 130 and a vibration damping signal of the driving unit 110 from the acceleration controller 142 and control the tool post 150 so that the movement of the recovered tool post 150 in the third direction is stopped.

The deceleration controller 144 may receive the third direction movement stop signal of the tool post 150 from the stop controller 143. The deceleration controller 143 may control the driving unit 110 so that the driving unit 110 is decelerated to a speed for machining so that machining of the workpiece may be performed again when the tool post 150 returns to a location of the workpiece.

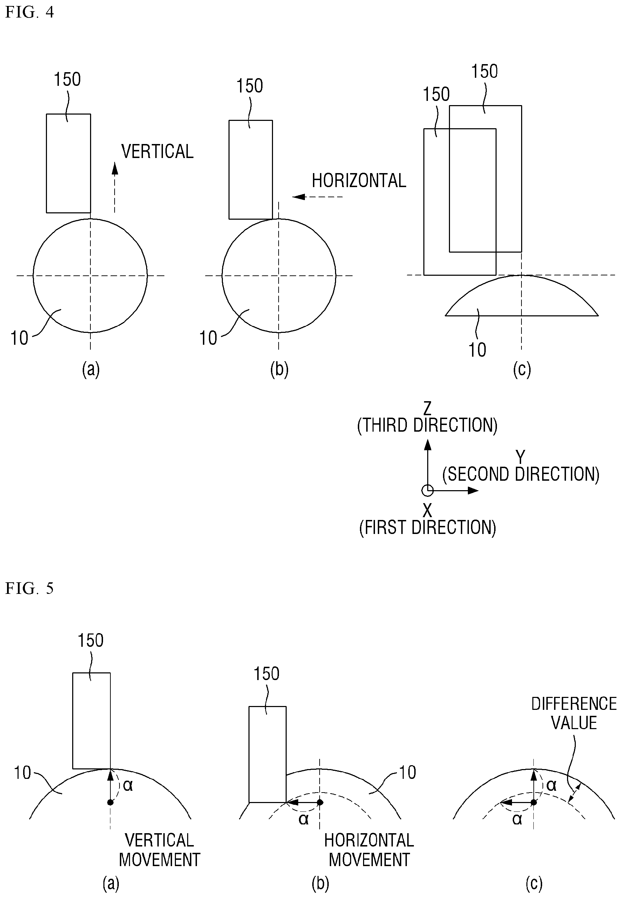

Hereinafter, fine movement of the tool post 150 will be described in more detail with reference to FIGS. 4 to 6.

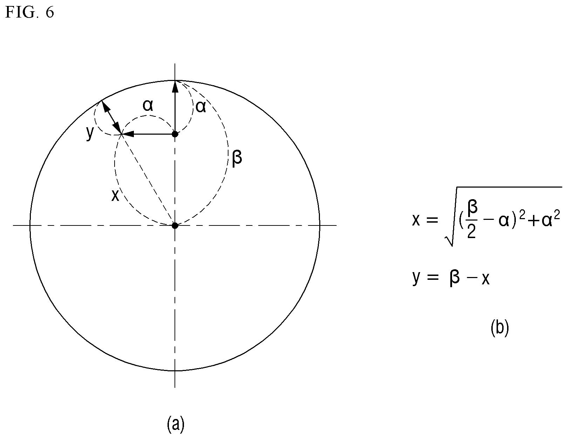

FIG. 4 is a schematic view for comparing and describing movement of a tool post in a vertical direction and movement of the tool post in a horizontal direction in the micro vibration damping system 100 for turning according to an embodiment of the present disclosure. FIG. 5 is an enlarged view for comparing and describing the movement of the tool post in the vertical direction and the movement of the tool post in the horizontal direction in the micro vibration damping system 100 for turning according to an embodiment of the present disclosure. FIG. 6 is a schematic view illustrating a drawing and an equation for calculating a fine movement distance in the micro vibration damping system 100 for turning according to an embodiment of the present disclosure.

Referring to FIGS. 4 to 6, the workpiece may have a first direction as an axis, for example, with an X-axis direction as an axis. In this case, the tool post 150 may be driven in a second direction and a third direction, that is, a left and right direction (herein referred to as a 'second direction' and denoted in an Y-axis direction) and an up-and-down direction (herein referred to as a 'third direction' and denoted in a Z-axis direction), vertical to the first direction of the workpiece. The tool post 150 may be provided to be located on a surface of the workpiece and cut the workpiece that rotates while moving in the X-axis direction.

For the purpose of chip segmentation generated during machining of the workpiece or for the purpose of turning, the tool post 150 implements cutting after being stopped and then instantaneously accelerated. When the tool post 150 is stopped and then instantaneously rapidly accelerated for the purpose of the chip segmentation or the turning, force is applied to the tool post 150 in a downward direction due to gravity and weight of the tool post 150, such that instantaneous vibrations are generated in the up-and-down direction (the third direction or the Z-axis direction).

In order to prevent unbalance in roughness such as the occurrence of a band in the workpiece due to the vibrations of the tool post 150 in the up-and-down direction, the vibrations generated in the tool post 150 should be damped.

As illustrated in FIG. 4, the tool post 150 may be moved in the direction (the third direction, the up-and-down direction, or the Z-axis direction) vertical to the axial direction of the workpiece or moved in the direction (the second direction, the left and right direction, or the Y-axis direction) horizontal to the axial direction of the workpiece.

However, it may be confirmed that when the axis is controlled in the vertical direction based on the workpiece machined by the tool post 150 to generate movement opposite to the vibrations, movement of the tool post 150 of a small size damping small vibrations of about 1 µm may not be generated. Accordingly, it may be seen that when the movement of the tool post 150 in the vertical direction and the movement of the tool post 150 in the horizontal direction are implemented at the same length, an influence of a movement distance of the tool post 150 on the workpiece having a circular shape is smaller when the tool post 150 is moved in the horizontal direction than when the tool post 150 is moved in the vertical direction. Accordingly, the tool post 150 is controlled to move around the axis of the workpiece in the direction horizontal to the left and right direction rather than the direction vertical to the up-and-down direction, such that a vibration effect smaller than an actual movement section is generated to implement more precise movement control than control in the vertical direction.

As described above, when the driving unit 110 implements the fine movement of the tool post 150 in order to damp the vibrations of the tool post 150 in the third direction (up-and-down direction), the driving unit 110 may be provided to finely move the tool post 150 in the second direction, that is, the horizontal direction, which is the left and right direction of the axis, vertical to the first direction, to damp the vibrations of the tool post 150 in the up-and-down direction.

Here, a timing at which the tool post 150 is finely moved in the second direction (the left and right direction or the Y-axis direction) is a during a period in which the occurrence of the movement due to instantaneous rapid acceleration of the tool post 150 after the stop of the tool post 150 is sensed through the sensor unit 130, and may be applied to a section in which the movement occurs due to the instantaneous rapid acceleration of the tool post 150 after the stop of the tool post 150.

In addition, a distance by which the tool post 150 is finely moved in the second direction (the left and right direction or the Y-axis direction) may be automatically adjusted according to a speed of instantaneous movement of the tool post 150, an end of the set material, and a machining depth.

As illustrated in FIG. 5, it may be seen that when the movement of the tool post 150 in the vertical direction (see (a) of FIG. 5) and the movement of the tool post 150 in the horizontal direction (see (b) of FIG. 5) by a distance α of a cutting depth of the workpiece from a location of the tool post 150 for machining the workpiece are performed, a difference (see (c) of FIG. 5) in the location of the tool post 150 with respect to the workpiece is generated.

A location for a movement distance of the tool post 150 in the horizontal direction may be implemented through an equation disclosed in (b) of FIG. 6 using the distance α of the workpiece and a cutting depth β of the workpiece, as illustrated in FIG. 6.

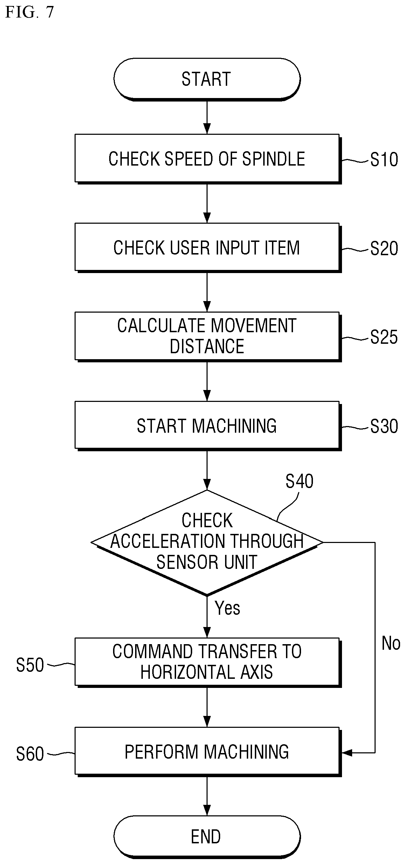

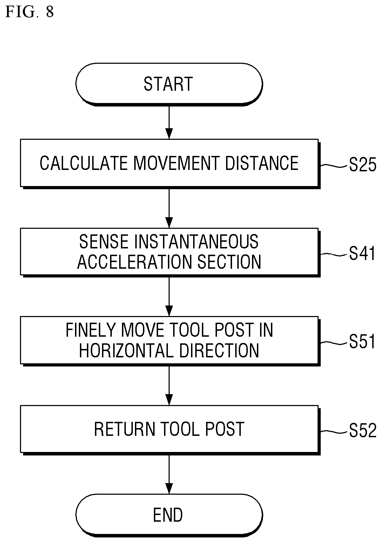

FIG. 7 is a machining flowchart of a workpiece in a micro vibration damping method for turning according to an embodiment of the present disclosure. FIG. 8 is a schematic flowchart of the micro vibration damping method for turning according to an embodiment of the present disclosure.

First, referring to FIG. 7, a machining flow of a workpiece according to an embodiment of the present disclosure may include a speed check step (S10) of the tool post 150 (spindle), a user input item (machining condition) check step (S20), a movement distance calculation step (S25) of the tool post 150, a machining start step (S30), an acceleration check step (S40) through the sensor unit 130, a horizontal movement step (S50), and a machining performing step (S60).

First, when the tool post 150 starts to machine the workpiece, a rotation speed and a movement speed of the tool post 150 are checked (speed check step (S10) of the tool post).

A user (operator) may input information for damping vibrations for turning such as a machining distance for chip segmentation or turning and a timing at which stop and rapid movement at the machining distance occurs, as well as a machining condition such as a type of workpiece material and a machining depth of the workpiece, and check such input items (user input item check step (S20)).

The calculation unit 120 may calculate a movement distance of the tool post 150 in the horizontal direction during chip segmentation or turning of the tool post 150 as well as a location for the chip segmentation of the tool post 150 or a location for the turning of the tool post 150 through the movement speed of the tool post 150 and the machining condition (movement distance calculation step (S25) of the tool post).

The control unit 140 controls the driving unit 110 according to a set cutting depth, cutting length, chip segmentation location, or turning location of the workpiece, and the tool post 150 starts to machine the workpiece (machining start step (S30)).

The sensor unit 130 may sense a section in which stop and instantaneous rapid acceleration occur as well as the stop and the rapid movement due to the chip segmentation or the turning of the tool post 150 (acceleration check step (S40) through the sensor unit).

When a speed change of the tool post 150 is not sensed by the sensor unit 130, the tool post 150 continuously performs the machining of the workpiece (machining performing step (S60)).

On the other hand, when a signal of rapid movement due to the stop and the instantaneous acceleration of the tool post 150 is applied to the sensor unit 130, the signal of the sensor unit 130 may be applied to the control unit 140, specifically, the acceleration controller 142. The control unit 140, specifically, the acceleration controller 142, controls the movement of the driving unit 110 in the horizontal direction through the value calculated by the calculation unit 120 to allow the tool post 150 to perform fine movement in the horizontal direction by a set distance. The tool post 150 moves by a set distance in a direction horizontal to the left direction or the right direction based on the axis of the workpiece (horizontal movement step (S50)).

Here, in the horizontal movement step of the tool post, movement of the tool post in the left direction or the right direction by the set distance and a return of the tool post to its original location may be simultaneously performed. The sensor unit 130 may apply a detection value according to the vibration damping and the return of the tool post 150 to the control unit 140, specifically, the acceleration controller 142. In addition, the acceleration controller 142 may apply the value applied to the acceleration controller 142 to the stop controller 143, and the stop controller 143 may control the driving of the driving unit 110 to stop the movement of the tool post 150 in the horizontal direction. In addition, a control result for the return of the tool post 150 to its original location after the micro vibrations of the tool post 150 are damped by the driving unit 110 may be applied to the deceleration controller 144. The deceleration controller 144 may control the instantaneous acceleration of the tool post 150 through the applied control result and transfer a control result to the speed controller 141 so that the tool post 150 may be decelerated to and driven at a speed for machining the workpiece.

As described above, after the tool post 150 is finely moved in the horizontal direction by the set distance, the tool post 150 is driven to immediately return to its original location. Through this, a vibration effect smaller than an actual movement section may be implemented, such that more precise movement control than control in the vertical direction may be implemented, and the vibrations generated in the tool post 150 may be artificially controlled and damped.

As described above, after the micro vibrations in the up-and-down direction generated in the tool post 150 during the chip segmentation or the turning are damped, the tool post 150 returns to a machining location of the workpiece, and accordingly, machines the workpiece again (machining performing step (S60)).

As described above, the tool post 150 performs the machining of the workpiece while implementing the chip segmentation or the turning during cutting of the workpiece. In this case, the micro vibration damping method for turning in the machining flow of the workpiece will be specifically described with reference to FIG. 7.

Referring to FIG. 7, during the chip segmentation or the turning, the tool post 150 is stopped and instantaneously accelerated, and the vibrations may be generated in the up-and-down direction in the tool post 150. Accordingly, the micro vibration damping method for turning may include a step (S25) of calculating a fine movement (movement) distance in order to damp the vibrations of the tool post 150 during the chip segmentation or the turning, an instantaneous acceleration sensing step (S41) of sensing instantaneous rapid acceleration of the tool post 150 after stop of the tool post 150, a step (S51) of moving the tool post 150 in the horizontal direction according to a sensed result, and a return step (S52) of returning the tool post 150 after the micro vibrations are damped. As described above, in order to machine the workpiece, the operator may input information related to the machining of the workpiece, and the calculation unit 120 may calculate the movement distance of the tool post 150 in the horizontal direction through the movement speed of the tool post and the machining condition (movement distance calculation step (S25) of the tool post). The movement distance of the tool post 150 in the horizontal direction calculated in the operation unit 120 may be variably adjusted according to the movement speed of the tool post 150 according to the instantaneous rapid acceleration of the tool post 150, the type of material, and the machining depth.

After the fine movement distance is calculated, the workpiece may be machined (machining start step (S30)). In a machining state of the workpiece, at the location for the turning or the location for the chip segmentation, the tool post 150 may be stopped and instantaneously rapidly accelerated. When the tool post 150 is stopped and instantaneously rapidly accelerated, the vibrations in the up-and-down direction are generated in the tool post 150.

When the stop and the movement of the instantaneous rapid acceleration of the tool post 150 occur during the machining of the workpiece by the tool post 150, the sensor unit 130 may be provided on the tool post 150 to sense the stop and the instantaneous rapid acceleration of the tool post 150 and also sense the vibrations (sensing step (S41)).

The sensing value sensed by the sensor unit 130 is applied to the acceleration controller 142. The acceleration controller 142 controls the driving unit 110 in another direction, specifically, the left and right direction horizontal to the axis of the workpiece, that may damp the vibrations of the tool post 150 in the up-and-down direction in order to damp the vibrations of the tool post 150 in the up-and-down direction, such that the tool post 150 moves in the horizontal direction by a set fine movement distance (step (S51) of moving the tool post).

The tool post 150 is moved in either the left direction or the right direction horizontal to the axis of the workpiece by the set fine movement distance and then immediately returns in an opposite direction (tool post return step (S52)).

As described above, as the tool post 150 actually vibrates in the up-and-down direction (direction vertical to the axis) based on the axis of the workpiece, the tool post 150 is moved in a direction, that is, the direction horizontal to the axis, different from the up-and-down direction, and then immediately returns to its original location to damp the vibrations generated in the tool post 150. A timing for the movement of the tool post 150 in the horizontal direction may be applied in a section where the rapid movement of the tool post 150 after the stop of the tool post 150 occurs through the sensor unit 130 attached to the tool post.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A micro vibration damping system for turning that damps vibrations generated in a tool post by sensing the vibrations of the tool post generated according to an instantaneous speed change of the tool post during machining of a workpiece on the tool post and controlling fine movement and return of the tool post in a direction vertical to a vibration direction of the tool post based on an axis of the workpiece.

2. The micro vibration damping system for turning of claim 1, comprising:
a driving unit implementing driving of the tool post;
a calculation unit calculating a fine movement distance of the tool post according to a rotation speed according to the driving of the tool post and a machining condition set according to the workpiece;
a sensor unit mounted on the tool post and sensing a speed signal of the tool post, a movement signal of the tool post, and/or an instantaneous speed change signal of the tool post; and
a control unit controlling the driving unit according to the signal of the sensor unit.

3. The micro vibration damping system for turning of claim 2, wherein a direction of the movement of the tool post includes both movement in a vertical direction and movement in a horizontal direction, and
the tool post implements the movement in the horizontal direction in a section in which rapid movement of the tool post after stop of the tool post occurs through the sensing by the sensor unit.

4. The micro vibration damping system for turning of claim 2, wherein the control unit controls driving of the driving unit for cutting the workpiece, driving of the driving unit for changing an instantaneous speed of the tool post after stop of the tool post, and driving of the tool post in the direction vertical to the vibration direction of the tool post when the tool post is instantaneously changed.

5. The micro vibration damping system for turning of claim 3, wherein the control unit controls the driving unit so that the tool post finely moves in the direction vertical to the vibration direction generated in the tool post according to an instantaneous speed change due to instantaneous rapid acceleration of the tool post after the driving of the tool post is stopped, and controls the driving unit so that the tool post returns to its original location as soon as the fine movement of the tool post is completed.

6. The micro vibration damping system for turning of claim 5, wherein the workpiece has a first direction that is horizontal as an axial direction,
for turning of the workpiece, vibrations are generated in the tool post in a second direction vertical to an up-and-down direction with respect to the first direction due to the instantaneous rapid acceleration of the tool post after the stop of the tool post, and
the driving unit damps the vibrations of the tool post in the second direction by finely moving the tool post in a third direction vertical to a left and right direction with respect to the first direction when the tool post finely moves in order to damp the vibrations of the tool post in the second direction.

7. The micro vibration damping system for turning of claim 6, wherein a timing at which the tool post is finely moved in the third direction is during a period in which occurrence of instantaneous acceleration of the tool post after the stop of the tool post is sensed through the sensor unit, and is applied to a section in which the movement occurs due to the instantaneous acceleration of the tool post after the stop of the tool post.

8. The micro vibration damping system for turning of claim 6, wherein a distance by which the tool post is finely moved in the third direction is automatically adjusted according to a speed of instantaneous movement of the tool post, an end of a set material, and a machining depth.

9. The micro vibration damping system for turning of claim 2, wherein the control unit includes:
a speed controller controlling a speed of the driving unit for machining the workpiece; and
an acceleration controller controlling a speed of the driving unit for instantaneous acceleration of the tool post after stop of the tool post for turning.

10. The micro vibration damping system for turning of claim 9, wherein an acceleration signal of the speed controller and a sensing value of the sensor unit are applied together to the acceleration controller.

11. The micro vibration damping system for turning of claim 9, wherein the control unit further includes:
a stop controller receiving a vibration damping signal of the driving unit from the acceleration controller and controlling the tool post to stop the movement of the tool post in a third direction; and
a deceleration controller receiving the movement stop signal of the third direction of the tool post from the stop controller and controlling the driving unit to decelerate the driving unit to a speed for machining.

12. A micro vibration damping method for turning, comprising:
calculating a movement distance of a tool post;
implementing machining;
sensing instantaneous acceleration of the tool post through a sensor unit;
controlling movement of the tool post in a direction horizontal to an axial direction of a workpiece according to a sensing value sensed by the sensor unit; and
performing the machining.

13. The micro vibration damping method for turning of claim 12, wherein in the calculating of the movement distance of the tool post, a machining movement distance of the tool post for machining the workpiece and a fine movement distance of the tool post for turning the workpiece are calculated as the movement distance, and
in order to calculate the fine movement distance of the tool post,
the micro vibration damping method for turning further comprises, before the calculating of the movement distance of the tool post,
checking a machining speed of the tool post; and
inputting a user input item including a machining condition.

14. The micro vibration damping method for turning of claim 12, wherein in the controlling of the movement of the tool post in the direction horizontal to the axial direction of the workpiece, micro vibrations of the tool post for an acceleration section are damped by implementing vibrations opposite to the micro vibrations generated in the tool post by returning the tool post to its original location as soon as fine movement of the tool post in the horizontal direction is completed.

15. The micro vibration damping method for turning of claim 14, wherein in the controlling of the movement of the tool post in the direction horizontal to the axial direction of the workpiece, a timing at which the tool post is finely moved and returns is during a period in which occurrence of instantaneous acceleration of the tool post after stop of the tool post is sensed through the sensor unit, and is applied to a section in which movement occurs due to the instantaneous acceleration of the tool post after the stop of the tool post.

16. The micro vibration damping method for turning of claim 6, wherein in the controlling of the movement of the tool post in the direction horizontal to the axial direction of the workpiece, a distance by which the tool post is finely moved in the horizontal direction is automatically adjusted according to a speed of instantaneous movement of the tool post, an end of a set material, and a machining depth.
